# EUROPÄISCHE PATENTSCHRIFT

(11) **EP 3 551 409 B1**
(45) Veröffentlichungstag und Bekanntmachung des Hinweises auf die Patenterteilung: **06.04.2022**
(21) Anmeldenummer: 17818083.2
(22) Anmeldetag: 06.12.2017
(51) Int. Cl.: B28C 5/02, B01F 5/04, B05B 7/14, C04B 28/24, C04B 28/26, C04B 28/34, C04B 40/00

(54) **SPRITZBETONAUFTRAGSVORRICHTUNG MIT EINER MISCHDÜSE UND SPRITZBETONAUFTRAGSVERFAHREN**
GUNNED-CONCRETE APPLICATION DEVICE HAVING A MIXING NOZZLE, AND GUNNED-CONCRETE APPLICATION METHOD
DISPOSITIF D'APPLICATION DE BÉTON PAR PROJECTION ÉQUIPÉ D'UNE TUYÈRE MÉLANGEUSE, ET PROCÉDÉ D'APPLICATION DE BÉTON PAR PROJECTION

(30) Priorität: 12.12.2016 DE 102016124102
(43) Veröffentlichungstag der Anmeldung: 16.10.2019
(73) Patentinhaber: Refratechnik Holding GmbH, 80807 München (DE)
(72) Erfinder: BENDER, Sebastian, 56566 Neuwied (DE); SCHEFFLER, Stefan, 56237 Sessenbach (DE); KESSELHEIM, Bertram, 56537 Bad Hönningen (DE)
(74) Vertreter: Dr. Solf & Zapf Patent- und Rechtsanwalts PartG mbB
(86) Internationale Anmeldenummer: PCT/EP2017/081752
(87) Internationale Veröffentlichungsnummer: WO 2018/108679

(56) Entgegenhaltungen:
- EP-A2- 0 206 224
- FR-A1- 2 407 803
- US-A- 2 543 517
- US-A- 2 701 905
- US-A- 4 421 797

## Beschreibung

Die vorliegende Erfindung betrifft eine Spritzbetonauftragsvorrichtung zum Trockenspritzen von Beton, insbesondere von Feuerbeton, sowie ein Spritzbetonauftragsverfahren bzw. Trockenspritzverfahren, insbesondere zum Auftragen von Feuerbeton.

Spritzbeton wird in einer Rohr- oder Schlauchleitung zur Einbaustelle gefördert, dort aus einer Spritzdüse pneumatisch aufgetragen und durch die Aufprallenergie verdichtet. Beim Trockenspritzverfahren werden das trockene, bevorzugt hydraulische, Bindemittel, die Zuschlag- und Zusatzstoffe sowie die Additive trocken vorgemischt und in einem Druckluftstrom durch die Rohr- oder Schlauchleitung zu einer Spritzdüse befördert. In der Spritzdüse wird dem Trockengemisch Wasser oder ein Flüssigbinder zugeführt und eine Spritzmasse erzeugt. Danach wird die Spritzmasse in einem ununterbrochenen Strahl auf die zu beschichtende Oberfläche aufgespritzt.

Feuerbeton wird mit einem bei Raumtemperatur erhärtenden Bindemittel und feuerfesten Zuschlägen hergestellt. Das bei Raumtemperatur erhärtende Bindemittel bewirkt die primäre bzw. Kaltbindung. Die technologischen Verhältnisse sind dabei ähnlich wie beim üblichen Baubeton. Charakteristisch für Feuerbeton ist der Übergang von der primären bzw. Kaltbindung zur keramischen Bindung, der beim ersten Erhitzen eintritt. Feuerbeton im Sinne der Erfindung hat einen Druckerweichungspunkt T₀₅ gemäß DIN EN ISO 1893: 2009-09 von T₀₅ ≥ 600 °C, bevorzugt T₀₅ ≥ 800 °C. Demnach sind feuerfeste bzw. refraktäre Zuschläge im Sinne der Erfindung solche Zuschläge, die für einen Feuerbeton mit dem oben genannten Druckerweichungspunkt T₀₅ geeignet sind.

Die GB 2 025 794 A offenbart eine Spritzdüse zum Aufbringen von Spritzbeton unter anderem auf Gebäudewände. Die Spritzdüse weist ein Einlassende und ein Auslassende auf. Am Einlassende wird eine pulverförmige Zementmischung zugeführt. Zudem weist die Spritzdüse eine Mischkammer auf, in der die pulverförmige Zementmischung mit Wasser gemischt wird. Dazu ist eine zylindrisehe Hülse vorhanden, welche die Mischkammer umgibt. Die Hülse weist zudem mehrere radiale Bohrungen auf, durch welche das Wasser in die Mischkammer in Form von einzelnen Wasserstrahlen eintritt. Am sich verjüngenden Auslassende der Spritzdüse tritt die Spritzmasse aus.

Aus der US 4,239,397 geht eine Spritzdüse zum Auftragen von faserverstärktem Spritzbeton hervor. Die Spritzdüse weist eine Leitung für die Zufuhr der Fasern und eine Leitung zur Zufuhr einer Trockenmischung von Bindemittel und Zuschlagstoffen auf, wobei die Leitungen so angeordnet sind, dass die Trockenmischung tangential in den Strom der Fasern eingeführt wird. An einem Auslassende der Spritzdüse wird Wasser aus einem Ring mit radialen Öffnungen radial von außen in den Materialstrom aus der Trockenmischung und den Fasern eingebracht.

Die WO 2005/098333 A1 offenbart ein Trockenspritzverfahren, bei dem in einer Mischeinrichtung eine Vormischung aus einer ersten Flüssigkeit und einer Trockenmischung erzeugt wird und diese Vormischung an einer Spritzdüse mit einer zweiten Flüssigkeit zu einer Spritzbetonfrischmasse vermischt wird. Die erste Flüssigkeit kann z.B. einen Abbindebeschleuniger aufweisen. Nach der Vormischung beginnt gemäß der WO 2005/098333 A1 bereits der Abbindeprozess. In der Mischeinrichtung wird die erste Flüssigkeit radial oder leicht schräg von außen dem Materialstrom der Trockenmischung zugeführt. In der Spritzdüse wird das Wasser ebenfalls mittels eines Wasserringes radial von außen zugeführt.

Aus der EP 1 153 861 A1 gehen eine Spritzbetonauftragsvorrichtung und ein -verfahren hervor. Gemäß der EP 1 153 861 A1 wird eine feinkörnige, trockene Spritzmasse, welche bereits Härter enthält in einem Mischrohr einer Befeuchtungseinrichtung mit Wasser vermischt. Das Wasser wird zuvor in der Befeuchtungseinrichtung mit Druckluft zerstäubt. Es kann am Ende des Mischrohres eine Nachbefeuchtung stattfinden. Gemäß einer weiteren Ausführungsform kann bei der Nachbefeuchtung der Härter zugegeben werden. Am Ende des Mischrohres ist eine Spritzdüse zum Auftragen der Spritzmasse angeordnet. Aus der WO 2010/105049 A2 geht ein Trockenspritzverfahren für Feuerbeton hervor bei dem eine Trockenmischung, die refraktäres Material sowie einen Abbinderegulator enthält, in einem Vorratsbehälter bereit gestellt wird. Die Trockenmischung wird in den Luftförderstrom einer Spritzbetonauftragsvorrichtung eingebracht. Des Weiteren wird an oder kurz vor der Spritzdüse der Spritzbetonauftragsvorrichtung ein Flüssigbinder mit der Trockenmischung gemischt. Die entstandene Spritzbetonfrischmasse wird dann auf die zu beschichtende Oberfläche mittels der Spritzdüse aufgetragen.

Die EP 0 738 676 A1 offenbart eine Vorrichtung zum Beigeben von Luft, Flüssigkeiten oder pulverförmigen Feststoffen in Spritzbetonleitungen. Die Vorrichtung weist ein in die Förderleitung einsetzbares ringförmiges Einsatzteil mit einem in eine Ringkammer des Einsatzteils mündenden Einlasskanal und mehreren aus der Ringkammer zum Förderstrom gerichteten Auslasskanälen auf. Die Auslasskanäle sind schräg zur Förderrichtung ausgerichtet. Durch das Einsatzteil wird ein pulverförmiges Gemisch in einen Förderstrom eingebracht. Der Förderstrom kann ein Luft/Wassergemisch sein.

Die US 4,421,797 A offenbart eine Vorrichtung und ein Verfahren zum Trockensprühen einer Betonzusammensetzung, wobei eine Bindemittelkomponente mit hydraulischem Anteil, z.B. Portlandzement, ein Zuschlagstoff und Wasser mittels einer Mischdüse auf ein Substrat aufgebracht werden. Dabei wird ein Teil der Bindemittelkomponente durch ein flüssiges reaktives Harz gebildet, welches durch eine ebenfalls mit der Mischung aufgebrachte Härterkomponente aktiviert oder zur Reaktion gebracht wird.

Die EP 0 206 224 A2 offenbart eine Vorrichtung zum pneumatischen Ausbringen eines hydromechanisch im Dichtstrom geförderten, erhärtenden Baustoffes, z.B. eines hydraulischen Spritzbetons, welcher am Ende einer den Baustoff heranführenden Rohr- oder Schlauchförderleitung ein Mundstück aufweist, dessen Förderrohr ein als Düse ausgebildetes, austragendes Ende, ein gegenüberliegendes, die Mündung einer Druckluftzuleitung aufweisendes Ende und ein zwischen beiden Enden mündendes Rohr besitzt, welches den Dichtstrom in den Druckluftstrom einbringt. Dem Baustoff wird durch mindestens eine Zuleitung zur Anregung seines Erhärtens Beschleuniger zugesetzt und der ausblasende Baustoffstrom wird mit einem flexiblen Förderleitungsabschnitt dirigiert. Das Mundstück ist mit einem anschließenden Teilstück der Druckluft- und der Rohr- bzw. Schlauchförderleitung abgelegt und an das austragende Ende des Mundstückes ist der Dirigierleitungsabschnitt angeschlossen. An das freie Ende des Dirigierleitungsabschnittes ist die Beschleunigerzuleitung angeschlossen, die unmittelbar vor der Ausblasöffnung mündet.

Die FR 2 407 803 A1 offenbart ein Verfahren zur Umsetzung von Beton durch pneumatisches Sprühen von Zusammensetzungen, die ein Entflockungsmittel enthalten können, wobei eine Vormischung von Wasser, Zement, kolloidalen Produkten mit feiner Teilchengröße und möglichen Hilfsstoffen durchgeführt wird. Das vorentflockte Bindemittel wird einer Spritzanlage zugeführt.

Aus der US 2,701,905 A ist eine Mischeinheit bekannt, wobei ein Aerosol aus Wasser und Luft von außen auf einen Trockenmaterialstrom aus Trockengemisch trifft.

Die US 2,543,517 A offenbart eine Mischeinrichtung bei der ein wässriges Gemisch aus Wasser und Luft in einen Trockenmaterialstrom aus Trockengemisch eingebracht wird.

Aufgabe der vorliegenden Erfindung ist die Bereitstellung einer Spritzbetonauftragsvorrichtung zum Trockenspritzen von Beton, insbesondere von, bevorzugt zementfreiem, Feuerbeton, und eines Spritzbetonauftragsverfahrens, wobei die physikalischen Eigenschaften des aufzutragenden Spritzbetons einfach und schnell anpassbar und optimierbar sein sollen.

Diese Aufgaben werden durch eine Spritzbetonauftragsvorrichtung gemäß Anspruch 1 und ein Spritzbetonauftragsverfahren mit den Merkmalen von Anspruch 14 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Eine schematische Ansicht der erfindungsgemäßen Spritzbetonauftragsvorrichtung
- Figur 2:: Einen Längsschnitt durch eine Mischdüse

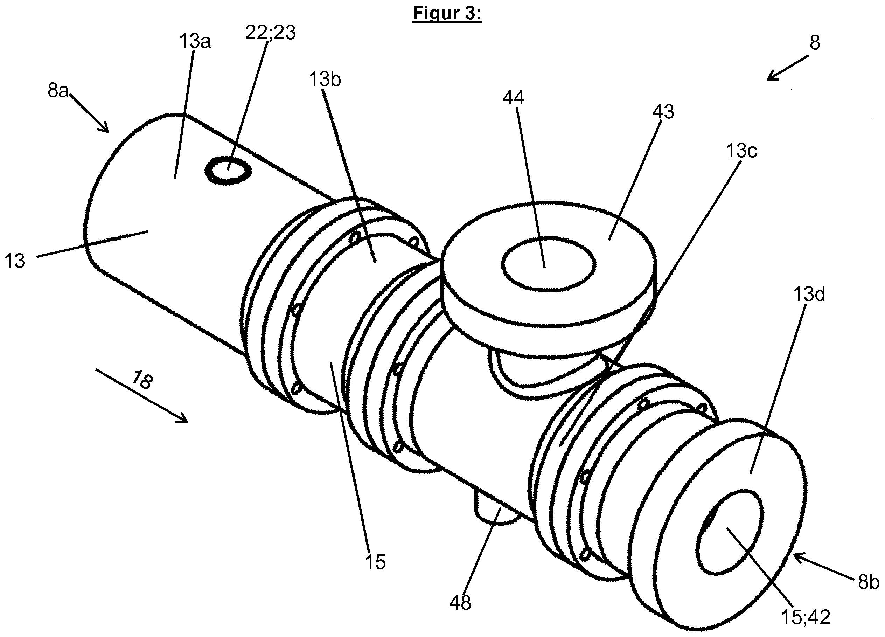

- Figur 3:: Eine perspektivische Ansicht einer Mischdüse

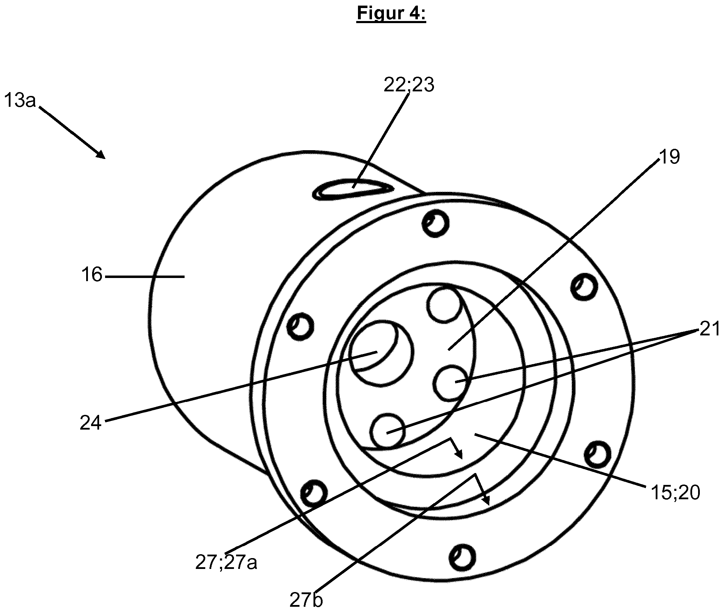

- Figur 4:: Eine perspektivische Ansicht eines einlassseitigen Gehäusebauteils der Mischdüse

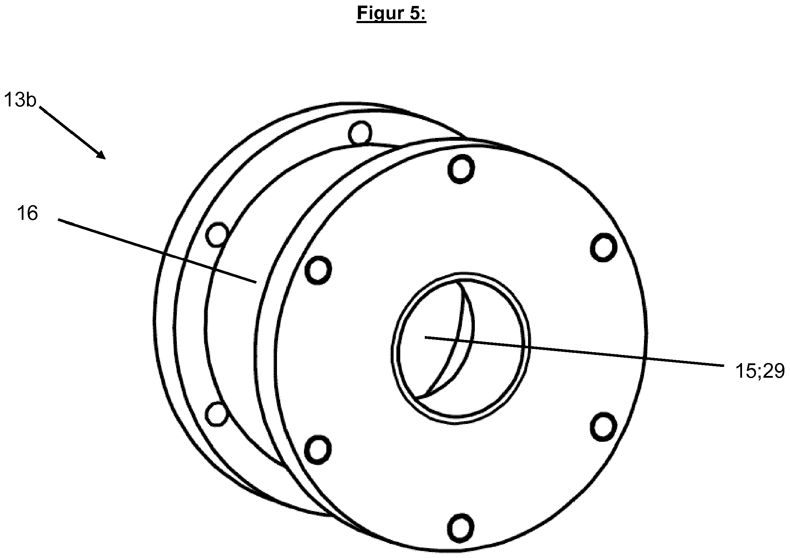

- Figur 5:: Eine perspektivische Ansicht eines ersten mittleren Bauteils der Mischdüse

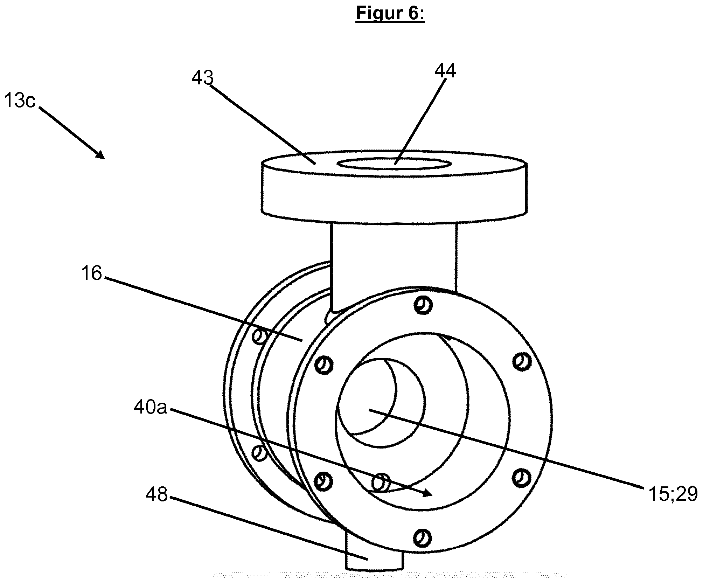

- Figur 6:: Eine perspektivische Ansicht eines zweiten mittleren Bauteils der Mischdüse

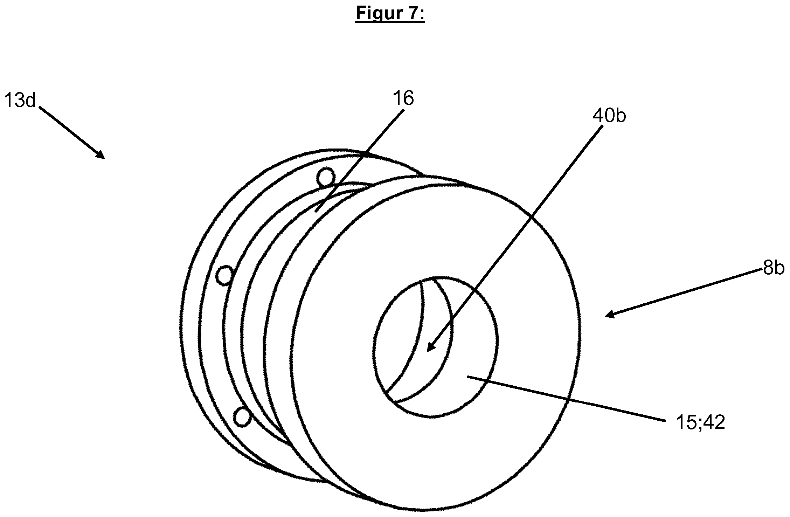

- Figur 7:: Eine perspektivische Ansicht eines auslassseitigen Gehäusebauteils der Mischdüse
- Figur 8:: Eine perspektivische Ansicht eines Injektionsrohres der Mischdüse
- Figur 9:: Einen Längsschnitt des Injektionsrohres
- Figur 10:: Kaltbiegefestigkeit REFRAJET Nanobond F-58 R
- Figur 11:: Kaltdruckfestigkeit REFRAJET Nanobond F-58 R
- Figur 12:: Kaltbiegefestigkeit REFRAJET Nanobond S-60
- Figur 13:: Kaltdruckfestigkeit REFRAJET Nanobond S-60
- Figur 14:: Kaltbiegefestigkeit REFRAJET Nanobond C-84 AL
- Figur 15:: Kaltdruckfestigkeit REFRAJET Nanobond C-84 AL

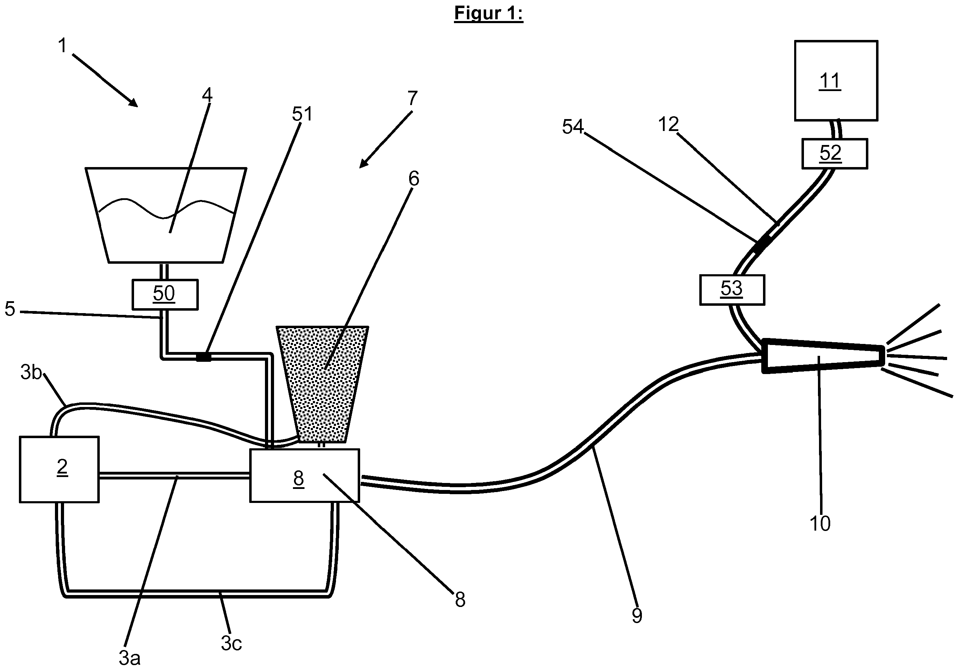

Die erfindungsgemäße Spritzbetonauftragsvorrichtung 1 (Fig. 1) weist eine Druckluftquelle 2, drei daran angeschlossene Luftförderleitungen 3a;3b;3c, einen mit einem Injektionsmedium bzw. -material, insbesondere einer Injektionsflüssigkeit, befüllten Injektionsmaterial-Vorratsbehälter 4, eine daran angeschlossene Injektionsmaterial-Förderleitung 5, vorzugsweise eine Injektionsmaterial-Förderpumpe 50, sowie einen mit einem Trockengemisch bzw. körnigem Trockenmaterial befüllten Trockengemisch-Vorratsbehälter 6 und eine Mischdüse 8 auf. Um die Durchflussmengen des Injektionsmaterials messen und steuern zu können, ist zudem vorzugsweise ein Injektionsmaterial-Durchflussmessgerät 51 vorhanden, welches innerhalb der Injektionsmaterial-Förderleitung 5 angeordnet ist.

Der Injektionsmaterial-Vorratsbehälter 4, die Injektionsmaterial-Förderleitung 5, vorzugsweise die Injektionsmaterial-Förderpumpe 50, vorzugsweise das Injektionsmaterial-Durchflussmessgerät 51, der Trockengemisch-Vorratsbehälter 6 und die Mischdüse 8 sind Bauteile bzw. Zubehörteile einer Baueinheit, welche als Spritzmaschine 7 bezeichnet wird. Die Spritzmaschine 7 ist entweder verfahrbar und weist dazu vorzugsweise in an sich bekannter Weise Räder und vorzugsweise einen Handgriff für die Bedienperson auf. In diesem Fall handelt es sich bei der Spritzmaschine 7 somit um einen Spritzwagen. Die Spritzmaschine 7 kann aber auch stationär sein, insbesondere stationär unter einem Silo angeordnet sein.

Eine erste Luftförderleitung 3a, die Injektionsmaterial-Förderleitung 5 und der Trockengemisch-Vorratsbehälter 6 sind jeweils an die Mischdüse 8 angeschlossen und führen der Mischdüse 8 das jeweilige Material bzw. Förderluft zu. Eine zweite Luftförderleitung 3b ist am unteren Ende des Trockengemisch-Vorratsbehälters 6 angeschlossen und führt dem Trockengemisch-Vorratsbehälter 6 Förderluft zum Ausblasen des Trockengemisches aus dem Trockengemisch-Vorratsbehälter 6 zu. In an sich bekannter Weise ist zudem am unteren Ende des Trockengemisch-Vorratsbehälters 6 eine Austragsvorrichtung, z.B. ein Rotor oder ein Taschenrad, vorhanden (nicht dargestellt), welche das Trockengemisch aus dem Trockengemisch-Vorratsbehälter 6 in einen Ausblasstutzen

(nicht dargestellt) fördert. Die Mischdüse 8 ist direkt oder indirekt über ein Zwischenstück, z.B. einen Schlauch, an den Ausblasstutzen angeschlossen. Die Mischdüse 8 dient somit zum Vermischen der einzelnen Komponenten des aufzutragenden Spritzbetons, also dem Injektionsmaterial aus dem Injektionsmaterial-Vorratsbehälter 4 mit dem Trockengemisch aus dem Trockengemisch-Vorratsbehälter 6 zu einem, insbesondere vorbenetzten, Materialgemisch.

Des Weiteren weist die erfindungsgemäße Spritzbetonauftragsvorrichtung 1 eine an die Mischdüse 8 angeschlossene Schlauchleitung 9, eine Spritzdüse 10, einen mit Flüssigbinder befüllten Flüssigkeits-Vorratsbehälter 11 und eine daran angeschlossene Flüssigkeits-Förderleitung 12 sowie vorzugsweise eine erste und eine zweite Flüssigkeits-Förderpumpe 52;53 auf. Um die Durchflussmengen des Flüssigbinders steuern zu können, weist die Spritzbetonauftragsvorrichtung 1 zudem vorzugsweise ein Flüssigkeits-Durchflussmessgerät 54 auf, welches innerhalb der Flüssigkeits-Förderleitung 12 angeordnet ist. Bei der ersten Flüssigkeits-Förderpumpe 52, welche den Flüssigbinder aus dem Flüssigkeits-Vorratsbehälter 11 saugt, handelt es sich vorzugsweise um eine Tauchpumpe. Bei der zweiten Flüssigkeits-Förderpumpe 53 handelt es sich vorzugsweise um eine Hochdruckpumpe. Die zweite Flüssigkeits-Förderpumpe 53 fördert den Flüssigbinder mit einem Druck von ca. 5 bis 30 bar zu einer Flüssigkeitsinjektionseinrichtung, z.B. einem Wasserring, der Spritzdüse.

Die Schlauchleitung 9 und die Flüssigkeits-Förderleitung 12 sind beide an die Spritzdüse 10 angeschlossen und führen dieser das aus der Mischdüse 8 kommende, insbesondere vorbenetzte, Materialgemisch bzw. das flüssige Bindemittel zu. Die Schlauchleitung 9 weist vorzugsweise eine Länge von mindestens 10 m auf. Die Spritzdüse 10 dient somit in an sich bekannter Weise zum Vermischen des, insbesondere vorbenetzten, Materialgemisches mit dem Flüssigbinder zu einer Spritzbetonfrischmasse bzw. Spritzmasse, insbesondere einer Feuerbetonspritzmasse, und zum Aufspritzen der Spritzmasse, insbesondere der Feuerbetonspritzmasse, auf den jeweiligen Untergrund.

Bei dem Injektionsmaterial handelt es sich vorzugsweise um eine Injektionsflüssigkeit. Es kann sich bei dem Injektionsmaterial aber auch um ein schüttfähiges bzw. loses Trockenmaterial, insbesondere Trockengemisch, handeln.

Das Injektionsmaterial enthält erfindungsgemäß zumindest ein Betonadditiv bzw. ein Betonzusatzmittel. Betonadditive bzw. Betonzusatzmittel werden dem Beton bekanntermaßen zugesetzt, um durch chemische oder physikalische Wirkung oder durch beides die Eigenschaften des Frisch- oder Festbetons, wie z. B. Verarbeitbarkeit, Erstarren, Erhärten oder Frostwiderstand, zu verändern. Abbindeadditive bzw. Abbindezusatzmittel bzw. Abbinderegulatoren beeinflussen die Abbindereaktion, z.B. die Erstarrungs- und/oder Erhärtungsreaktion, des jeweiligen Bindemittels. Betonzusatzmittel werden (im Gegensatz zu Betonzusatzstoffen) in so geringen Mengen zugegeben (insgesamt, also die Summe aller Betonzusatzmittel < 5 Gew.-% bezogen auf die Trockenmasse der Gesamtsumme aus Zuschlägen und Bindemittel des Betons), dass sie als Raumanteil des Betons ohne Bedeutung sind. Sie werden folglich in der Stoffraumrechnung nicht berücksichtigt. Betonadditive bzw. Betonzusatzmittel können auch als Hilfsmittel beim keramischen Brand dienen, welcher im Fall des Feuerbetons nach dem Auftragen des Feuerbetons, in situ stattfindet. Sinterhilfsmittel z.B. senken z.B. die Brenntemperatur. Additive bzw. Betonzusatzmittel werden in der Regel flüssig, pulverförmig oder als Granulat geliefert.

Vorzugsweise enthält das Injektionsmaterial zumindest einen Erstarrungsbeschleuniger und/oder Erhärtungsbeschleuniger und/oder Verzögerer und/oder Plastifizierer und/oder ein Staubbindemittel und/oder ein Geliermittel. Geliermittel leiten bekanntermaßen eine Gelierung des Bindemittels ein.

Der Erstarrungsbeschleuniger dient in an sich bekannter Weise dazu, die Erstarrungsreaktion des Bindemittels anzuregen und steigert dadurch die Frühfestigkeit. Bei dem Erstarrungsbeschleuniger handelt es sich im Fall des flüssigen Injektionsmaterials vorzugsweise um Wasserglas oder Alkalilösungen.

Außerdem kann das trockene Injektionsmaterial Zement und/oder Trockenphosphate als Beschleuniger enthalten.

Ist das Injektionsmaterial flüssig, handelt es sich insbesondere um eine Suspension und/oder Lösung und/oder Emulsion. Vorzugsweise ist das flüssige Injektionsmaterial zumindest wasserhaltig. Das flüssige Injektionsmaterial kann auch (zusätzlich) Öl- und/oder Alkohol- und/oder Glycerin-haltig sein.

Ist das Injektionsmaterial ein trockenes Material bzw. Gemisch, handelt es sich um ein pulverförmiges Material bzw. Gemisch mit einer Korngröße ≤ 0,5 mm, bevorzugt ≤ 0,1 mm gemäß DIN EN ISO 1927-3 (März 2013).

Das flüssige oder trockene Injektionsmaterial kann zudem, wie bereits erläutert, auch noch weitere, insbesondere pulverförmige Bestandteile enthalten. Beispielsweise kann das Injektionsmaterial Mikrosilika oder pyrogene Kieselsäure oder Aerosil oder MgO enthalten, die beim keramischen, in-situ Brand des Feuerbetons als Sinterhilfsmittel wirken. Die Sinterhilfsmittel tragen zur Kaltbindung nicht oder nicht wesentlich bei, sie greifen also nicht oder nicht wesentlich in die Abbindereaktion des Spritzbetons ein.

Das schüttfähige bzw. lose Trockengemisch besteht erfindungsgemäß ausschließlich aus körnigem und gegebenenfalls faserförmigem Material, welches im wesentlichen inert ist, also mit dem jeweiligen an der Spritzdüse 10 zugeführten Bindemittel nicht oder nur unwesentlich reagiert. Erfindungsgemäß sind in dem Trockengemisch somit keine Abbindeadditive bzw. Abbindezusatzmittel enthalten. Zudem ist kein Bindemittel enthalten.

Bevorzugt besteht das Trockengemisch ausschließlich aus mineralischem und refraktärem bzw. feuerfestem, Material bzw. Zuschlag. Wie bereits oben erläutert, sind feuerfeste bzw. refraktäre Materialien bzw. Zuschläge im Sinne der Erfindung solche Materialien bzw. Zuschläge, die für einen Feuerbeton mit dem oben genannten Druckerweichungspunkt T₀₅ geeignet sind. Vorzugsweise weist das Trockengemisch Körner aus folgenden Materialien auf:
Andalusit und/oder Cordieritschamotte und/oder Basalt und/oder Bauxit und/oder Blähschiefer und/oder Leichtschamotte und/oder Chromerz und/oder Chromkorund und/oder Corhart Zac (Zirkonsilikat) und/oder Edelkorund (WFA) und/oder Brauner Korund (BFA) und/oder Hohlkugelkorund und/oder Kerphalit und/oder Kyanit und/oder Sillimanit und/oder Magnesia und/oder Microsilika und/oder kalzinierte Tonerden (Reaktivtonerden) und/oder Schamotte und/oder Olivin und/oder Perlit und/oder Vermiculit und/oder Recyclingrohstoffe (Sanitärporzellan, Isolatorenporzellan, Schieberplattenbruch, Schamottebruch, etc.) und/oder Quarz und/oder Quarzglas (Fused Silica) und/oder Siliziumcarbid und/oder Spinell und/oder Mullit und/oder Zirkonmullit und/oder Tabulartonerde und/oder Graphit oder einen anderen Kohlenstoffträger und/oder Ton und/oder Zirkonoxid und/oder Zirkonsand.

Das Trockengemisch weist dabei vorzugsweise sowohl grob- und mittelkörnige als auch feinkörnige Bestandteile bzw. Grob- und Mittelkornfraktionen (> 0,063 mm gemäß DIN EN ISO 1927-3 (März 2013)) als auch Mehlkornfraktionen (≤ 0,063 mm gemäß DIN EN ISO 1927-3 (März 2013)) auf. Bevorzugt weist das Trockengemisch folgende Kornverteilung gemäß DIN EN ISO 1927-3 (März 2013) auf (die Anteile beziehen sich auf die gesamte Trockenmasse und addieren sich zu 100 Gew.%):

| **Sieb** | **Min [Gew.%]** | **Max [Gew.%]** |
|---|---|---|
| > 6,3 mm | 0,0 | 10,0 |
| > 3,15 - 6,3 mm | 0,0 | 20,0 |
| > 1,00 - 3,15 mm | 15,0 | 40,0 |
| > 0,063 - 1,00 mm | 15,0 | 40,0 |
| ≤ 0,063 mm | 20 | 55,0 |

Bei dem Flüssigbinder handelt es sich vorzugsweise um eine Lösung und/oder Suspension in Wasser oder einem anderen Lösungsmittel oder um flüssiges Polymer, vorzugsweise Kunstharz. Die Suspension enthält vorzugsweise dispergierte, kolloidale Teilchen. Der Flüssigbinder ist vorzugsweise zementfrei und erstarrt und erhärtet direkt nach dem Aufspritzen in Folge der Reaktion mit den im Injektionsmaterial enthaltenen Zusatzmitteln. Im Falle des Feuerbetons sorgt der Flüssigbinder somit für die primäre, sogenannte Kaltbindung.

Vorzugsweise handelt es sich bei dem Flüssigbinder um einen refraktären bzw. feuerfesten Flüssigbinder, der also nach dem Erhärten für den Einsatz in einem Feuerbeton mit dem oben genannten Druckerweichungspunkt geeignet ist.

Bei dem Flüssigbinder handelt es sich vorzugsweise um Kieselsol oder Wasserglas, bevorzugt Na- und/oder Ka- und/oder Li-Wasserglas, oder Phosphorsäure oder Monoaluminiumphosphat oder einen Polymerbinder, vorzugsweise Kunstharz, bevorzugt Phenolharz, insbesondere Novolak, oder Mischungen aus den vorgenannten Bindern.

Der Flüssigbinder enthält vorzugsweise keine Betonadditive bzw. Betonzusatzmittel. Er kann aber z.B. ein Frostschutzmittel enthalten, das verhindert, dass der Flüssigbinder vor dem Mischen bei tiefen Temperaturen gefriert.

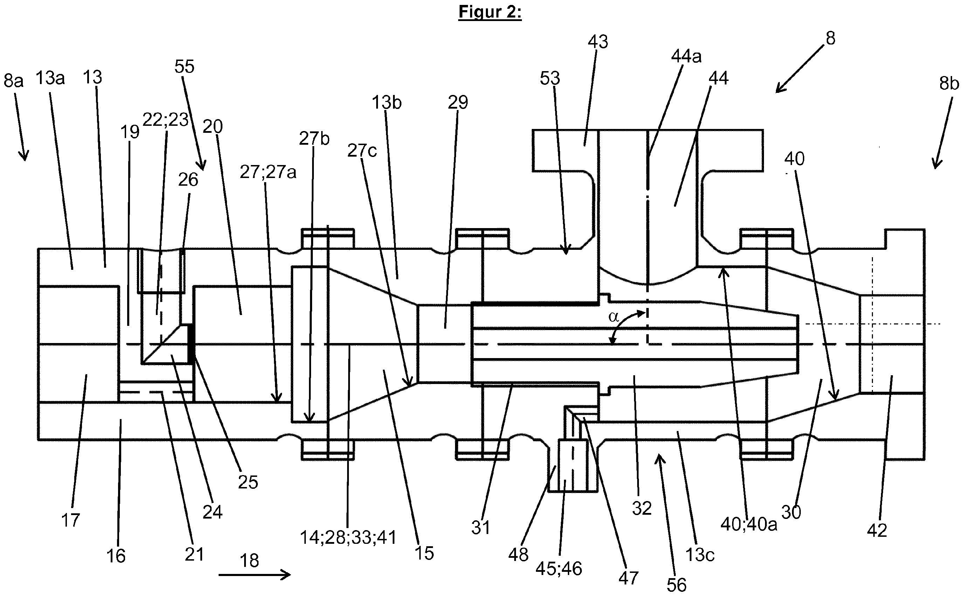

Die Mischdüse 8 (Fig. 1, 2) weist eine Aerosolerzeugungseinrichtung 55 zur Erzeugung eines Aerosols aus dem flüssigen oder trockenen, rieselfähigem Injektionsmaterial und Förderluft sowie eine Aerosolinjektionseinrichtung 56 zur Injektion des Aerosols, insbesondere mittig, in das Innere eines aus einem Trockengemisch bestehenden Trockenmaterialstroms auf. Bei einem Aerosol handelt es sich um ein heterogenes Gemisch aus festen und/oder flüssigen Schwebeteilchen in einem Gas.

Die Mischdüse 8 weist zudem ein Düsengehäuse 13 sowie eine Düsenlängsachse 14 auf. Des Weiteren weist die Mischdüse 8 ein Düseneinlassende 8a und ein diesem in Richtung der Düsenlängsachse 14 gegenüberliegendes Düsenauslassende 8b auf. Zudem weist die Mischdüse 8 einen sich in Richtung der Düsenlängsachse 14 durch die Mischdüse 8 hindurch erstreckenden Strömungs- bzw. Förderkanal 15 auf. Der Förderkanal 15 erstreckt sich vom Düseneinlassende 8a zum Düsenauslassende 8b durch die Mischdüse 8 durch.

Eine Hauptförderrichtung 18 der Mischdüse 8 ist parallel zur Düsenlängsachse 14 und erstreckt sich vom Düseneinlassende 8a zum Düsenauslassende 8b hin.

Das Düsengehäuse 13 weist zudem eine Gehäuseumfangs- bzw. -außenwand 16 auf, welche den Strömungs- bzw. Förderkanal 15 umgibt. Die Gehäusewand 16 besteht vorzugsweise aus Metall oder aus Keramik oder aus Kunststoff. Vorzugsweise besteht die Mischdüse 8 zudem aus mehreren, insbesondere vier Gehäuseteilen 13a bis 13d, welche fest miteinander verbunden, insbesondere verschraubt, sind. Im Rahmen der Erfindung liegt es dabei auch, dass das Gehäuseteil 13b entfällt und die Gehäuseteile 13a und 13c direkt aneinander gesetzt sind, worauf weiter unten näher eingegangen wird.

Das Düseneinlassende 8a der Mischdüse 8 dient zum Anschluss der ersten Luftförderleitung 3a. Infolgedessen weist die Mischdüse 8 am Düseneinlassende 8a an sich bekannte Mittel zum gasdichten Anschluss der ersten Luftförderleitung 3a auf. Bei diesen Mitteln handelt es sich beispielsweise um eine an sich bekannte Kupplung mit Gummidichtung, insbesondere eine Schnellschlusskupplung. Zudem weist die Mischdüse 8 am Düseneinlassende 8a eine zum Düseneinlassende 8a hin offene Luftkammer 17 auf. Die Luftkammer 17 weist vorzugsweise einen kreiszylindrischen Querschnitt auf. Zudem ist sie mit ihrer Luftkammerachse insbesondere koaxial zur Düsenlängsachse 14 angeordnet.

An die Luftkammer 17 schließt sich in Hauptförderrichtung 18 gesehen eine Trennwand 19 an. Die Trennwand 19 trennt die Luftkammer 17 von einer ersten Mischkammer bzw. Aerosolkammer 20. Die Trennwand 19 durchtrennt also den Förderkanal 15. Sie ist vorzugsweise senkrecht zur Hauptförderrichtung 18 bzw. zur Düsenlängsachse 14. Die Trennwand 19 weist eine einlassseitige Trennwandoberfläche und eine auslassseitige Trennwandoberfläche auf. Die beiden Trennwandoberflächen sind vorzugsweise senkrecht zur Düsenlängsachse 14 bzw. zur Hauptförderrichtung 18.

Zudem weist die Trennwand 19 mehrere, insbesondere kreiszylindrische, Luftdurchgangskanäle 21 auf, welche sich in Hauptförderrichtung 18 durch die Trennwand 19 durch erstrecken. Die Luftdurchgangskanäle 21 sind, in Umfangsrichtung in Bezug zur Düsenlängsachse 14 gesehen, um die Düsenlängsachse 14 verteilt angeordnet und von der Düsenlängsachse 14 beabstandet. Dabei weisen die Luftdurchgangskanäle 21 vorzugsweise alle denselben Abstand von der Düsenlängsachse 14 auf. Vorzugsweise sind 5 bis 20 Luftdurchgangskanäle 21 vorhanden. Die Luftdurchgangskanäle 21 sind in Umfangsrichtung vorzugsweise ebenfalls alle gleich voneinander beabstandet.

Die Trennwand 19 weist zudem einen Injektionsmaterial-Zuführkanal 22 zum Zuführen des Injektionsmaterials in die Aeorosolkammer 20 auf. Der Injektionsmaterial-Zuführkanal 22 weist einen ersten, insbesondere kreiszylindrischen, Zuführkanalabschnitt 23 und einen sich daran anschließenden zweiten, insbesondere kreiszylindrischen, Zuführkanalabschnitt 24 auf. Der erste Zuführkanalabschnitt 23 erstreckt sich, insbesondere senkrecht zur Düsenlängsachse 14 bzw. Hauptförderrichtung 18, von außen in die Gehäuseaußenwand 16 und die Trennwand 19 hinein. Eine Kanalachse des ersten Zuführkanals 23 ist somit vorzugsweise senkrecht zur Düsenlängsachse 14 bzw. Hauptförderrichtung 18 und erstreckt sich radial in Bezug zur Düsenlängsachse 14. Der zweite Zuführkanalabschnitt 24 weist ebenfalls eine Kanalachse auf, welche sich jedoch parallel zur Düsenlängsachse 14 bzw. Hauptförderrichtung 18 erstreckt. Insbesondere ist die Kanalachse koaxial zur Düsenlängsachse 14. Infolgedessen weist der Injektionsmaterial-Zuführkanal 22 einen Knick auf, an dem der erste und der zweite Zuführkanalabschnitt 23;24 ineinander übergehen. Der zweite Zuführkanalabschnitt 24 mündet zudem in die Aerosolkammer 20. Am freien Ende des zweiten Zuführkanalabschnitts 24 ist eine Zerstäubungs- bzw. Vernebelungsdüse 25 (schematisch dargestellt) in dem zweiten Zuführkanalabschnitt 24 angeordnet. Die Zerstäubungsdüse 25 dient zum zerstäubenden Injizieren des Injektionsmaterials in die Aerosolkammer 20. Bei der Zerstäubungsdüse 25 handelt es sich insbesondere um eine Flachstrahldüse, Glattstrahldüse, Hohlkegeldüse, Vollkegeldüse oder Nebeldüse (im Fall der Injektionsflüssigkeit) oder um eine Sandstrahldüse oder Strahldüse für rieselfähige Schüttgüter (im Fall des trockenen Injektionsmaterials).

Der erste Zuführkanalabschnitt 23 mündet, wie bereits erläutert, nach außen an die Umgebung. Infolgedessen weist der erste Zuführkanalabschnitt 23 Mittel zum Anschluss der Injektionsmaterial-Förderleitung 5 auf, insbesondere ein Innengewinde 26.

Die Aerosolkammer 20 weist eine die Aerosolkammer 20 umgebende Kammerumfangswandung 27 auf. In Hauptförderrichtung 18 gesehen weist die Kammerumfangswandung 27 zunächst einen kreiszylindrischen Wandungsabschnitt 27a auf, an welchen sich ein weiterer kreiszylindrischer Wandungsabschnitt 27b anschließt, dessen Durchmesser jedoch größer ist als der Durchmesser des ersten Wandungsabschnitts 27a. An den zweiten kreiszylindrischen Wandungsabschnitt 27b schließt sich ein konischer Wandungsabschnitt 27c an, der sich in Hauptförderrichtung 18 gesehen, also vom Düseneinlassende 8a zum Düsenauslassende 8b hin gesehen, verjüngt. Die Aerosolkammer 20 weist dabei eine Kammermittelachse 28 auf, welche vorzugsweise koaxial zur Düsenlängsachse 14 ist. Der zweite zylindrische Wandungsabschnitt 27b dient insbesondere zur Materialersparnis und kann auch entfallen, so dass der erste zylindrische Wandungsabschnitt 27a direkt in den konischen Wandungsabschnitt 27c übergeht. Bzw., falls der Gehäuseteil 13b entfällt, entfällt der konische Wandungsabschnitt 27c. Im einfachsten Fall ist die Kammerumfangswandung 27 durchgehend zylindrisch ausgebildet.

An die Aerosolkammer 20 schließt sich in Hauptförderrichtung 18 gesehen ein, insbesondere kreiszylindrischer, Verbindungskanal 29 an. Eine Kanalachse des Verbindungskanals 29 ist ebenfalls vorzugsweise koaxial zur Düsenlängsachse 14. Der Verbindungskanal 29 mündet in eine zweite Mischkammer bzw. Wirbelkammer 30. Der Verbindungskanal 29 weist zudem ein Innengewinde 31 auf, welches zum Einschrauben eines Injektionsrohres 32 dient.

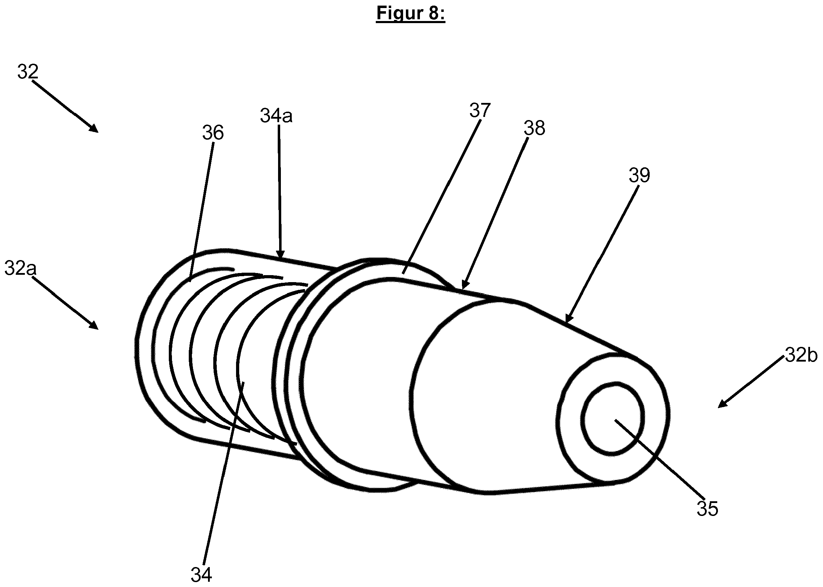

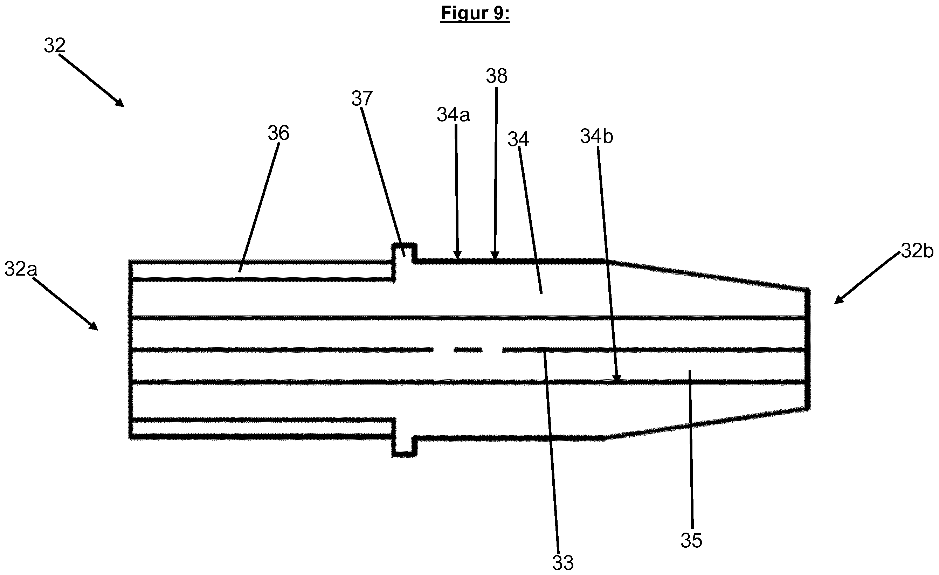

Das Injektionsrohr 32 (Fig. 2, 8 und 9) weist ein einlassseitiges Rohrende 32a und ein auslassseitiges Rohrende 32b auf. Das Injektionsrohr 32 besteht vorzugsweise aus Metall oder aus Keramik. Zudem weist das Injektionsrohr 32 eine Rohrlängsachse 33 auf, welche vorzugsweise ebenfalls koaxial zur Düsenlängsachse 14 ist. Eine Rohrwand 34 des Injektionsrohres 32 weist eine Rohrwandaußenfläche 34a und Rohrwandinnenfläche 34b auf. Die Rohrwandinnenfläche 34b ist durchgehend kreiszylindrisch ausgebildet und umgibt einen Rohrströmungskanal bzw. Rohrförderkanal 35, der sich vom einlassseitigen Rohrende 32a bis zum auslassseitigen Rohrende 32b durch das Injektionsrohr 32 hindurch erstreckt. Die Rohrwandaußenfläche 34a weist in Hauptförderrichtung 18 gesehen zunächst ein Außengewinde 36 auf. An das Außengewinde 36 schließt sich ein von der Rohrwandaußenfläche 34a radial abstehender Ringbund 37 an. An den Ringbund 37 schließt sich ein kreiszylindrischer Flächenabschnitt 38 an, an welchen sich wiederum ein konischer Flächenabschnitt 39 anschließt. Der konische Flächenabschnitt 39 verjüngt sich in Hauptförderrichtung 18 gesehen. Er ist zudem am auslassseitigen Rohrende 32b angeordnet.

Die Wirbelkammer 30 weist eine Kammerumfangswandung 40 und eine Kammermittelachse 41 auf, welche koaxial zur Düsenlängsachse 14 ist. Die Kammerumfangswandung 40 der Wirbelkammer 30 weist in Hauptförderrichtung 18 gesehen einen zylindrischen Wandungsabschnitt 40a und einen sich daran anschließenden konischen Wandungsabschnitt 40b auf. Der konische Wandungsabschnitt 40b verjüngt sich in Hauptförderrichtung 18 gesehen, also vom Düseneinlassende 8a zum Düsenauslassende 8b hin gesehen.

Die Wirbelkammer 30 mündet in einen Auslasskanal 42 mit bevorzugt kreiszylindrischem Querschnitt. Der Auslasskanal 42 mündet an die Umgebung. Eine Kanalachse des Auslasskanals 42 ist vorzugsweise koaxial zur Düsenlängsachse 14.

Das Injektionsrohr 32 ist mit seinem Außengewinde 36 in das Innengewinde 31 des Verbindungskanals 29 so weit eingeschraubt, dass ein Teil des Injektionsrohres 32 in die Wirbelkammer 30 hinein ragt. Insbesondere ragt der Bereich des Injektionsrohres 32 mit dem kreiszylindrischen und dem konischen Flächenabschnitt 38; 39 in die Wirbelkammer 30 hinein. Bzw. ein das auslassseitige Rohrende 32b des Injektionsrohres 32 aufweisender Teil des Injektionsrohres 32 ragt in die Wirbelkammer 30 hinein. Das Injektionsrohr 32 ist dabei von der Kammerumfangswandung 40 beabstandet, so dass dazwischen ein Strömungsquerschnitt gebildet wird.

Das Düsengehäuse 13 weist außerdem einen Anschlussstutzen 43 auf, der zum Anschluss des Trockengemisch-Vorratsbehälters 6 dient. Der Anschlussstutzen 43 steht radial außen von der Gehäuseumfangswand 16 ab. Zudem weist der Anschlussstutzen 43 einen, vorzugsweise zylindrischen, Trockengemisch-Einlasskanal 44 auf. Eine Kanalachse 44a des Trockengemisch-Einlasskanals 44 erstreckt sich radial zur Düsenlängsachse 14. Die Kanalachse 44a kann aber auch schräg zur Düsenlängsachse 14 angeordnet sein. Vorzugsweise beträgt der Winkel α (Fig. 1) 30 bis 90°. Insbesondere beträgt er 90°. Der Trockengemisch-Einlasskanal 44 kann selbstverständlich auch einen abgebogenen bzw. abgeknickten Verlauf aufweisen. Die oben angegebenen Winkelbereiche gelten dann für den Mündungsbereich in dem der Trockengemisch-Einlasskanal 44 in die Wirbelkammer 30 mündet.

Des Weiteren erstreckt sich der Trockengemisch-Einlasskanal 44 durch die Gehäuseumfangswand 16 hindurch und mündet in die Wirbelkammer 30. Dabei ist der Trockengemisch-Einlasskanal 44 so angeordnet, dass er in radialer Richtung in Bezug zur Düsenlängsachse 14 fluchtend zu dem in die Wirbelkammer 30 hinein ragenden Injektionsrohr 32 angeordnet ist. Vorzugsweise ist der Trockengemisch-Einlasskanal 44 in radialer Richtung fluchtend zum kreiszylindrischen Flächenabschnitt 38 des Injektionsrohres 32 angeordnet. Der Trockengemisch-Einlasskanal 44 ist somit am einlassseitigen Ende der Wirbelkammer 30 angeordnet. Bzw. der Trockengemisch-Einlasskanal 44 ist an dem in Hauptförderrichtung 18 hinteren Ende der Wirbelkammer 30 angeordnet. Bzw. der Trockengemisch-Einlasskanal 44 ist im Bereich des zylindrischen Wandungsabschnitts 40a der Wirbelkammer 30 angeordnet.

Die Mischdüse 8 weist zudem vorzugsweise einen zusätzlichen Bypass-Lufteinlasskanal 45 zur möglichen zusätzlichen Zufuhr von Bypassluft auf. Der Lufteinlasskanal 45 weist einen an die Umgebung mündenden ersten Einlasskanalabschnitt 46 und einen sich daran anschließenden, zweiten Einlasskanalabschnitt 47 auf. Der erste Einlasskanalabschnitt 46 erstreckt sich, insbesondere senkrecht zur Düsenlängsachse 14, durch einen weiteren Anschlussstutzen 48 durch und in die Gehäusewand 16 hinein. Eine Kanalachse des ersten Einlasskanalabschnitts 46 erstreckt sich somit radial in Bezug zur Düsenlängsachse 14. Der zweite Einlasskanalabschnitt 47 weist eine Kanalachse auf, welche sich parallel zur Düsenlängsachse 14 erstreckt. Die Kanalachse kann auch etwas geneigt zur Düsenlängsachse 14 sein und einen Winkel < 90° mit dieser einschließen. Infolgedessen weist der Lufteinlasskanal 45 einen Knick auf, an dem der erste und der zweite Einlasskanalabschnitt 46; 47 ineinander übergehen. Die Kanalachse des zweiten Einlasskanalabschnitts 47 ist allerdings beabstandet von der Düsenlängsachse 14. Der zweite Einlasskanalabschnitt 47 mündet in die Wirbelkammer 30 und zwar am einlassseitigen Ende der Wirbelkammer 30. Zudem ist der zweite Einlasskanalabschnitt 47 in einer Ansicht senkrecht zur Düsenlängsachse 14 gesehen vorzugsweise radial gegenüberliegend zum Trockengemisch-Einlasskanal 44 angeordnet.

Der Bypass-Lufteinlasskanal 45 dient zum Anschluss einer vorzugsweise vorhandenen Bypass-Luftförderleitung 3c, welche mit der Druckluftquelle 2 in Verbindung steht. Alternativ kann auch eine zusätzliche Druckluftquelle vorhanden sein.

Dabei ist die gesamte Druckluftversorgung der Spritzbetonauftragsvorrichtung 1 so eingerichtet, dass die Mischdüse 8 auf dem gleichen Druckniveau betrieben wird wie die übrige Spritzmaschine 7. Denn bei zu hohem Druck in der Mischdüse 8 würde die Luft in die Maschine 7 zurück strömen. Im Umkehrschluss würde das Materialgemisch in das Injektionsrohr 32 gedrückt werden und die Mischdüse 8 verschlossen werden.

Im Folgenden wird nun das erfindungsgemäße Spritzbetonauftragsverfahren unter Verwendung der erfindungsgemäßen Spritzbetonauftragsvorrichtung 1 erläutert:
Am Düseneinlassende 8a wird Förderluft von der Druckluftquelle 2 durch die erste Luftförderleitung 3a in die Luftkammer 17 der Mischdüse 8 gefördert. Die Förderluft strömt aus der Luftkammer 17 durch die Luftdurchgangskanäle 21 in Hauptförderrichtung 18 in die Aerosolkammer 20.

Des Weiteren wird das Injektionsmaterial aus dem Injektionsmaterial-Vorratsbehälter 4, beispielsweise mittels der Injektionsmaterial-Förderpumpe 50, bei der es sich vorzugsweise um eine druckluftbetriebene Doppelmembranpumpe handelt, durch die Injektionsmaterial-Förderleitung 5 und den Injektionsmaterial-Zuführkanal 22 in die Aerosolkammer 20 gefördert.

Das Injektionsmaterial wird, wie bereits erläutert, durch die Zerstäubungsdüse 25 in die Aerosolkammer 20 eingedüst. Dabei wird das Injektionsmaterial, auch aufgrund der gleichzeitig mit hoher Geschwindigkeit in die Aerosolkammer 20 hinein strömenden Förderluft, zer- bzw. verstäubt und mit der Förderluft vermischt, so dass sich das Aerosol bildet. Das Injektionsmaterial wird dabei in das Innere des Förderluftstroms, insbesondere mittig in den Förderluftstrom, eingebracht. Eine Düsenlängsachse der Zerstäubungsdüse 25 ist dabei parallel zur Hauptförderrichtung 18.

Die Aerosolkammer 20, die Luftdurchgangskanäle 21, der Injektionsmaterial-Zuführkanal 22 und die am Ende des Injektionsmaterial-Zuführkanals 22 angeordnete Zerstäubungsdüse 25 sind Teil der Aerosolerzeugungseinrichtung 55 der Mischdüse 8.

Das gebildete Aerosol strömt in Hauptförderrichtung 18 aus der Aerosolkammer 20 heraus in den Verbindungskanal 29 und durch den Rohrströmungskanal 35 in die Wirbelkammer 30 hinein. Da das Injektionsrohr 32 weit in die Wirbelkammer 30 herein ragt, strömt das Aerosol am auslassseitigen Ende der Wirbelkammer 30 in diese hinein.

Zusätzlich zu dem Aerosol wird in die Wirbelkammer 30 zudem das Trockengemisch zugeführt.

Das Trockengemisch strömt durch den Trockengemisch-Einlasskanal 44 in die Wirbelkammer 30 hinein. Das Trockengemisch strömt also in radialer Richtung in Bezug zur Düsenlängsachse 14 in die Wirbelkammer 30 hinein. Da der Trockengemisch-Einlasskanal 44 am einlassseitigen Ende der Wirbelkammer 30 angeordnet ist und das Injektionsrohr 32 in die Wirbelkammer 30 hinein ragt, trifft der Trockenmaterialstrom aus dem Trockengemisch beim Einströmen in die Wirbelkammer 30 auf die Rohrwandaußenfläche 34a, insbesondere auf den kreiszylindrischen Flächenabschnitt 38, des Injektionsrohres 32. Dadurch wird der Trockenmaterialstrom geteilt und optimal in der Wirbelkammer 30 verwirbelt und verteilt.

Das Trockengemisch wird dabei aufgrund der höheren Strömungsgeschwindigkeit im Injektionsrohr 32 gegenüber dem Materialstrom des Trockengemisches automatisch in die Wirbelkammer 30 eingesaugt (Venturi-Effekt) und dort mit dem Injektionsmaterial vermischt. Der Venturi-Effekt resultiert insbesondere aus der Verjüngung des konischen Wandungsabschnitts 40b der Kammerumfangswandung 40 der Wirbelkammer 30. Denn dies bewirkt eine Beschleunigung des Materials und einen Ansaugeffekt.

Ist das Injektionsmaterial eine Injektionsflüssigkeit, wird das Trockengemisch zudem in vorteilhafter Weise in der Aerosolkammer 20 vorbenetzt. Vorzugsweise weist das vorbenetzte Materialgemisch eine Feuchte von 0,2 bis 7,0 Gew.-%, bevorzugt von 0,2 bis 5,0 Gew.-%, besonders bevorzugt von 0,2 bis 2,0 Gew.-% bezogen auf die Trockenmasse auf.

In der Wirbelkammer 30 erfolgt die Injizierung des Aerosols mittig in den Materialstrom des Trockengemisches, da das Injektionsrohr 32 in die Wirbelkammer 30 herein ragt. Bzw. das Aerosol wird von innen in den Trockenmaterialstrom injiziert. Bzw. es wird in das Innere des Trockenmaterialstroms injiziert. Die Injektionsrichtung ist dabei parallel zur Hauptförderrichtung 18. Dies hat den Vorteil, dass das, bevorzugt feuchte, Aerosol nicht in die Trockengemisch-Förderleitung 7 gelangt. Ein Zusetzen und Verkleben der Trockengemisch-Förderleitung 7 wird dadurch verhindert.

Die Wirbelkammer 30, der in die Wirbelkammer 30 mündende Trockengemisch-Einlasskanal 44 und das in die Wirbelkammer 30 hinein ragende und mit der Aerosolkammer 20 in fluidtechnischer Verbindung stehende Injektionsrohr 32 sind somit Teil der Aerosolinjektionseinrichtung 56 der Mischdüse 8.

Wie bereits erläutert, kann zudem über die Bypass-Luftförderleitung 3c durch den Bypass-Lufteinlasskanal 45 zusätzliche Druckluft in die Wirbelkammer 30 eingebracht werden. Diese verringert das Absetzen des Materials an der Kammerumfangswandung 40 der Wirbelkammer 30. Die zusätzliche Luftzufuhr sorgt gleichzeitig auch für eine noch stärkere Verwirbelung des Materialgemisches in der Wirbelkammer 30.

Das entstandene, bevorzugt vorbenetzte, Materialgemisch wird dann durch den Auslasskanal 42 der Mischdüse 8 in die Schlauchleitung 9 gefördert und am spritzdüsenseitigen Ende der Schlauchleitung 9 in oder kurz vor der Spritzdüse 10 mit der Flüssigkeit zur fertigen, aufzutragenden Betonspritzmasse vermischt. Die fertige Spritzmasse weist vorzugsweise eine Feuchte von 6,0 bis 12,0 Gew.- % (dichter Beton) bzw. von 20,0 bis 40,0 Gew.-% (Leichtbeton), jeweils bezogen auf die Trockenmasse, auf. Die Zugabe der Flüssigkeit erfolgt beispielsweise über einen an sich bekannten Wasserring oder eine an sich bekannte Ringspaltdüse. Die Spritzmasse wird dann von der jeweiligen Bedienperson mit der Spritzdüse 10 auf die jeweilige Oberfläche appliziert. Bei der zu beschichtenden Oberfläche handelt es sich insbesondere um mineralische Untergründe, bevorzugt um Mauerwerke oder Feuerfest-Untergründe oder Gesteine oder Isoliermaterialien, oder Stahlpanzer, welche jeweils mit keramischen oder metallischen Verankerungssystemen bestückt sein können.

Vorteil der Erfindung ist, dass die Zusammensetzung der Spritzmasse und insbesondere die Rheologie der Spritzmasse und deren Reaktivität über die Konzentration der Zusatzmittel in dem Injektionsmaterial flexibel einstellbar sind. Denn die Förderluft, das Trockengemisch und das Injektionsmaterial werden einzeln und aus einzelnen, voneinander getrennten, Vorratsbehältern der Mischdüse zugeführt. Die Zusammensetzung des Injektionsmaterials und des Trockengemisches sowie des Flüssigbinders können somit unabhängig voneinander geändert werden.

Da die Betonzusatzstoffe bzw. Additive bereits in dem, insbesondere flüssigen, Injektionsmaterial enthalten sind, werden sie in dem Aerosol und dadurch in dem Trockengemisch sehr fein und homogen verteilt, was zu verbesserten Festigkeitseigenschaften des Frischbetons und des abgebundenen Festbetons führt.

Gleiches gilt auch für die weiteren Bestandteile des Injektionsmaterials, insbesondere die Sinterhilfsmittel. Insbesondere können mit dem Injektionsmaterial, ob flüssig oder trocken, generell sehr feine, pulverförmige Stoffe zugegeben werden, die nur schlecht über das Trockengemisch zugegeben werden können. Denn die feinen Bestandteile sind aufgrund ihres geringen Schüttgewichts nur sehr schwer homogen in das Trockengemisch einzumischen. Zudem besteht bei der Herstellung des Trockengemisches die Gefahr, dass durch diverse Staubabsaugungen während des Mischens, durch Fördern und Absacken des Trockengemisches, die feinen Bestandteile, in Relation zu den anderen Komponenten des Trockengemisches wieder unkontrolliert dem Trockengemisch entzogen werden.

Vorteilhaft ist zudem, dass das Trockengemisch im Prinzip eine unbegrenzte Lagerzeit aufweist, da Bindemittel und Reaktionspartner getrennt voneinander gelagert werden und somit nicht vorzeitig miteinander reagieren können. Aufgrund dessen finden auch bei höherer Luftfeuchtigkeit keine Reaktionen statt, so dass auch bei langer Lagerzeit keine Leistungseinbußen entstehen. Auch ist das Trockengemisch, da es keine Additive enthält, gesundheitlich unbedenklich und demnach kennzeichnungsfrei. Außerdem sind Betonadditive nicht lagerstabil, was ebenfalls die Haltbarkeit des Trockengemisches begrenzen würde. Der Düsenführer, welche die Spritzdüse bedient, hat zudem keine Mehrbelastung infolge eines zusätzlichen Equipments oder Handling. Denn die Vorbenetzung erfolgt in der Mischdüse, also vor der Schlauchleitung, welche zur Spritzdüse führt. Die Spritzdüse selber ist nicht modifiziert und dadurch unkompliziert und wie üblich handlebar.

Vorteilhaft ist auch, dass das Injektionsrohr auswechselbar ist, da es abrasiv stark belastet ist.

Die Injektion des Aerosols in das Innere des Trockenmaterialstroms ist besonders vorteilhaft, da im Gegensatz zu einer von außen radial zugeführten Zumischung (z.B. über einen Wasserring), keine Materialverklebungen, Absetzungen oder Verstopfungen des Förderschlauches ("Stopper") gebildet werden. Insbesondere setzt sich das Injektionsmaterial nicht außenseitig ab, da es von dem schwereren Trockenmaterial umschlossen bzw. eingeschlossen ist. Dies verbessert auch den Mischeffekt. Die Injektion des vorab definiert erzeugten Aerosols zentral von innen führt - im Fall des flüssigen Injektionsmaterials - zu einer unmittelbaren Benetzung des Trockenmaterials, ohne dass die Schlauchinnenseiten mit dem Aerosol direkt in Berührung kommen.

Im Rahmen der Erfindung liegt es dabei auch, dass das Injektionsrohr 32 am Düsenauslassende 8b aus dem Düsengehäuse 13 heraus ragt (nicht dargestellt). Bzw. das auslassseitige Rohrende 32b des Injektionsrohres 32 ragt aus dem Düsengehäuse 13 heraus. Auch bei dieser Ausführungsform wird gewährleistet, dass das Aeorosol immer, insbesondere mittig, in das Innere des Trockenmaterialstroms injiziert wird. Die Injektionsrichtung ist dabei ebenfalls parallel zur Hauptförderrichtung 18. Das Vermischen des Aerosols mit dem Trockengemisch erfolgt dann außerhalb der Mischdüse 8, insbesondere innerhalb der Schlauchleitung 9. Gegebenenfalls müssen die Strömungsquerschnitte entsprechend angepasst werden, damit die Körner des Trockengemisches die Mischdüse 8 ungehindert durchströmen können. Vorzugsweise entspricht der der Strömungsquerschnitt für die Bereiche der Mischdüse 8, die von dem Trockenmaterialstrom durchströmt werden, mindestens 3x der maximalen Korngröße. Dies gilt selbstverständlich für jegliche Ausführungsformen.

Auch ist es im Rahmen der Erfindung, dass die Mischdüse 8 in der Schlauchleitung 9 angeordnet ist. Vorzugsweise ist sie aber Teil der Spritzmaschine 7 und am Auslass der Spritzmaschine 7 angeordnet.

Beim dem Verfahren der WO 2010/105049 A2 reagiert zudem an der Spritzdüse der Flüssigbinder mit den in den Trockenkomponente eingemischten abbinderelevanten Additiven in trockener Form. Dieser Mechanismus führt zu einer deutlich geringeren Reaktivität im direkten Vergleich zu dem erfindungsgemäßen Verfahren, bei das flüssigen Injektionsmaterial injiziert wird, welches an der Spritzdüse mit dem Flüssigbinder reagiert. Die erhöhte Reaktivität der miteinander reagierenden, flüssigen Komponenten trägt zur Festigkeitssteigerung bei.

Ein weiterer Vorteil der Erfindung ist die Vorbenetzung des Trockengemisches mit dem flüssigen Injektionsmaterial, was durch die Mischdüse erst möglich wird. Das vorbenetzte Trockenmaterial wird an der Spritzdüse durch den Flüssigbinder deutlich besser benetzt und durchmischt, wie ein staubtrockenes Material. Dies führt zum einen zu niedrigeren Rückprallwerten und zu einer verminderten Staubentwicklung.

Überraschenderweise wurde zudem im Rahmen der Erfindung festgestellt, dass auch die Festigkeit des gebrannten Feuerbetons verbessert werden konnte. Dies resultiert offenbar ebenfalls aus der Vorbenetzung, durch die die refraktären Feinkomponenten des Trockengemisches besser aufgeschlossen werden. Es bildet sich eine Hülle um die refraktären Feinteilchen, was zu einer verbesserten Ausbildung der keramischen Bindephase des Feuerbetons führt.

Es wurden dabei deutliche Festigkeitssteigerungen in Relation zu pulverförmigen Additiven, eingeführt über das Trockengemisch, festgestellt.

Die genannten Vorteile belegen nachfolgende Ausführungsbeispiele:
Es wurden drei, von ihrer Materialkonzeption vollkommen unterschiedliche Materialien zu Testzwecken herangezogen:
▪ REFRAJET Nanobond F-58 R
   Ein zementfreier Trockenspritzbeton auf Basis einer CO- beständigen Schamotte. Typisches Einsatzgebiet stellt die Reparatur von Hochofenschächten dar (Kaltreparatur und Heißreparatur mittels Roboter).
▪ REFRAJET Nanobond S-60
   Ein zementfreier Trockenspritzbeton auf Basis Siliziumcarbid. Typisches Einsatzgebiet sind Müllverbrennungsanlagen.
▪ REFRAJET Nanobond C-84 AL:
   Ein zementfreier Trockenspritzbeton auf Basis Edelkorund (WFA) mit einem speziellen Anti Wetting System für die Aluminiumindustrie. Typisches Einsatzgebiet ist der Badbereich von Aluminiumschmelzöfen (Kaltreparatur und Heißreparatur).

Insgesamt standen 6 × 2000 Kg Trockenmaterial für Versuchszwecke zur Verfügung. Aus den drei o.g. Rezepturen wurden jeweils Spritzpanels hergestellt. Dies erfolgte jeweils sowohl nach dem Verfahren gemäß der WO 2010/105049 A2 (SdT) und nach dem erfindungsgemäßen Verfahren.

Bei dem Verfahren gemäß der WO 2010/105049 A2 wurde dem Trockenmaterial bereits bei der Produktion entsprechende Abbindeadditive untergemischt. Zum Verspritzen wurde eine handelsübliche Trockenspritzvorrichtung (Typ: Meyco Piccola 020 E, kleiner Rotor 12×Rundloch, 1. Gang, Schlauchlänge: 20 m, Förderdruck ca. 3,5 bar) verwendet. Am Ende des Förderschlauchs wurde über einen Wasserring mit einem Druck von jeweils ca. 20 bar der Flüssigbinder (Kieselsol) eingedüst.

Bei dem erfindungsgemäßen Verfahren wurde ebenfalls die oben genannte Trockenspritzvorrichtung verwendet. Allerdings wurde zusätzlich die Mischdüse verwendet. Diese wurde an den Anfang des Förderschlauchs angeschlossen. Dem Trockenmaterial wurden bei der Produktion keine Abbindeadditive untergemischt. Die Trockenmischung enthielt somit keinerlei reaktive Substanzen. Am Ende des Förderschlauchs wurde wiederum über den Wasserring der Flüssigbinder (Kieselsol) eingedüst.

Es zeigte sich, dass alle drei Produkttypen verspritzt werden konnten, jedoch konnten bereits während der Versuchsdurchführung signifikante Differenzen hinsichtlich der Installationsqualität der beiden Varianten (SdT/erfindungsgemäß) erkannt werden:
In direkter Gegenüberstellung zeigte das erfindungsgemäße System eine deutlich geringere Staubentwicklung beim Auftragen des Materials an der Spritzwand/decke. Dieses positive Eigenschaftsmerkmal kann auf die Vorbenetzung des staubtrockenen Materials zurückgeführt werden, welches dann am Wasserring der Spritzdüse wesentlich leichter und intensiver benetzt werden kann und somit weniger Staubentwicklung ausübt.

In direkter Gegenüberstellung zeigte das erfindungsgemäße System einen deutlich geringeren Rückprall beim Auftragen des Materials an der Spritzwand/decke. Auch dieses positive Eigenschaftsmerkmal kann auf die Vorbenetzung des staubtrockenen Materials zurückgeführt werden, welches dann am Wasserring der Spritzdüse wesentlich leichter und intensiver benetzt werden kann. Die in der Trockenmischung enthaltenen Feinteile entweichen nicht als Staub, sondern tragen dazu bei, ein homogenes Materialbett an der Wand/Decke auszubilden, wodurch der Rückprall signifikant reduziert wird.

Das über die Mischdüse verspritzte Material ist augenscheinlich reaktiver und verfestigt an der Spritzwand/Decke deutlich schneller. Dies führt zu einem schnelleren Arbeitsfortschritt, da auch problemlos größere Wandstärken in einem Arbeitsgang aufgetragen werden können.

Zur Ermittlung der physikalischen Eigenschaftsmerkmale wurden zudem Spritzpanels angefertigt (300×300×150 mm), welche nach 24 h ausgeschalt und weiterbehandelt wurden. Bereits beim Ausschalen konnte bei allen drei Materialqualitäten übereinstimmend bei den erfindungsgemäß hergestellten Spirtzpanels eine höhere mechanische Ausschalfestigkeit festgestellt werden, wohingegen die nach dem Verfahren gemäß Stand der Technik verspritzen Proben noch relativ bröselig waren und entsprechend vorsichtig weiterbehandelt werden mussten.

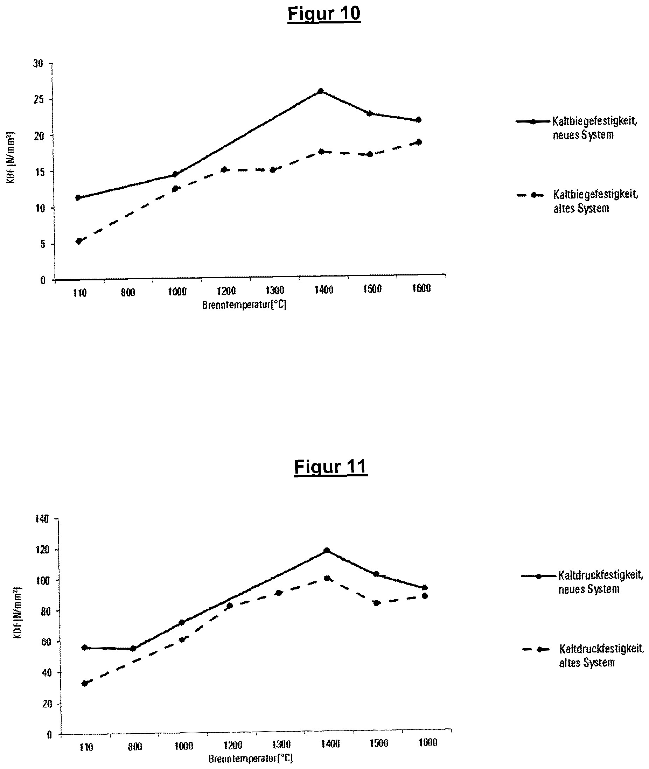

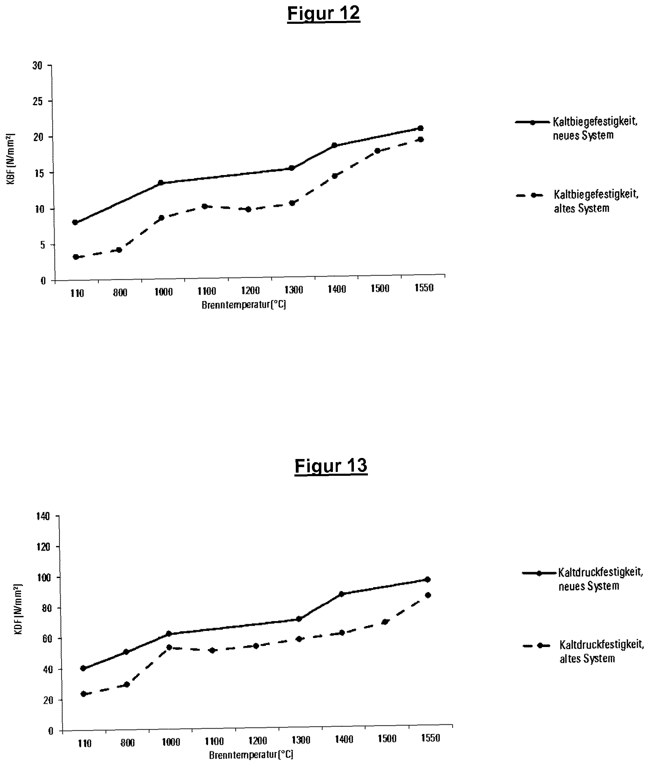

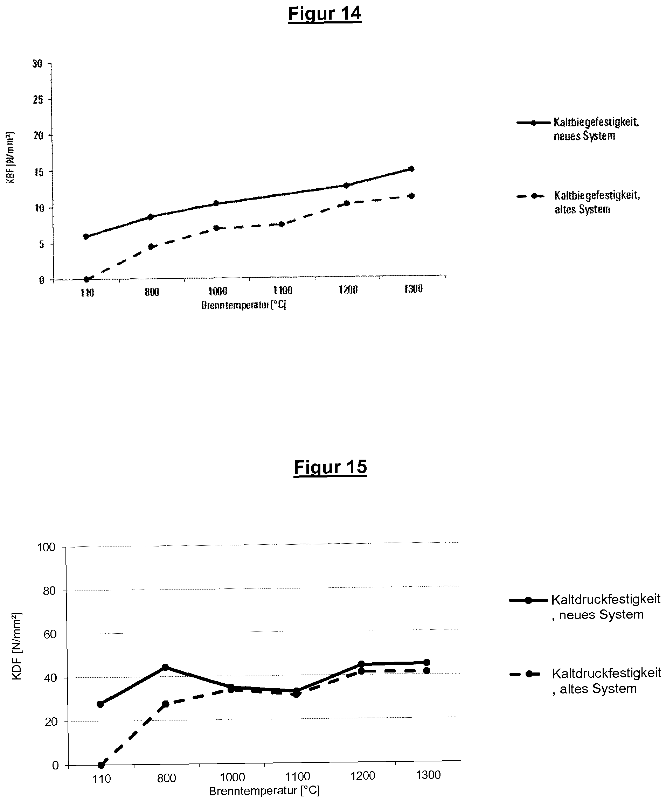

Nach dem Ausschalen wurden die Materialproben (300×300×150 mm) bei 110°C/24h getrocknet und anschließend mittels Diamantsäge Probekörper im Format B (230×64×54 mm) gemäß DIN EN 1927-5 (März 2013) ausgesägt, entsprechend der jeweiligen bei den auf der X-Achse der Fig. 10-15 angegebenen Prüftemperaturen mit einer Haltezeit von jeweils 5h vorgebrannt und ausgewertet.

Die Kaltdruck- und -biegefestigkeiten wurden gemäß DIN EN 1927-6 (März 2013) ermittelt. Die signifikanten Festigkeitssteigerungen sind in den Fig. 10-15 eindeutig zu erkennen:
Bei allen drei zu Testzwecken zur Verfügung stehenden Materialtypen konnten über den gesamten Temperaturverlauf bessere Eigenschaftsmerkmale der mit der Mischdüse verspritzen Varianten ermittelt werden.

## Patentansprüche

1. Spritzbetonauftragsvorrichtung (1) zum Aufspritzen einer Spritzmasse, insbesondere einer Feuerbetonspritzmasse, auf eine Oberfläche aufweisend:
a) eine Druckluftquelle (2) zum Bereitstellen von Förderluft,
b) einen mit einem wenigstens ein Betonzusatzmittel, bevorzugt einen Abbinderegulator, enthaltenden trockenen oder flüssigen Injektionsmaterial, insbesondere einer Injektionsflüssigkeit, befüllten Injektionsmaterial-Vorratsbehälter (4),
c) einen mit einem Trockengemisch aus bindemittel- und abbinderegulatorfreiem Material befüllten Trockengemisch-Vorratsbehälter (6),
d) eine Mischdüse (8) zum Vermischen des Injektionsmaterials mit der Förderluft und dem Trockengemisch zu einem, insbesondere vorbenetzten, Materialgemisch,
e) eine Spritzdüse (10) zum Aufspritzen der Spritzmasse auf die zu beschichtende Oberfläche,
f) eine an die Mischdüse (8) angeschlossene Schlauchleitung (9) zum Fördern des Materialgemisches zu der Spritzdüse (10),
g) einen mit einem Flüssigbinder befüllten Flüssigkeits-Vorratsbehälter (11),
h) Mittel zum Vermischen des, insbesondere vorbenetzten, Materialgemisches mit dem Flüssigbinder zur Spritzmasse am spritzdüsenseitigen Ende der Schlauchleitung (9) vor oder in der Spritzdüse (10).

2. Spritzbetonauftragsvorrichtung (1) nach Anspruch 1,
**dadurch gekennzeichnet, dass**
die Spritzbetonauftragsvorrichtung (1) eine an die Druckluftquelle (2) angeschlossene Luftförderleitung (3a), sowie eine an den Injektionsmaterial-Vorratsbehälter (4) angeschlossene Injektionsmaterial-Förderleitung (5) aufweist, wobei die Leitungen (3a;5) jeweils an die Mischdüse (8) angeschlossen sind und der Mischdüse (8) das jeweilige Material bzw. die Förderluft zuführen.

3. Spritzbetonauftragsvorrichtung (1) nach Anspruch 1,
**dadurch gekennzeichnet, dass**
das Injektionsmaterial zumindest einen Erstarrungsbeschleuniger und/oder Erhärtungsbeschleuniger und/oder Verzögerer und/oder Plastifizierer und/oder ein Staubbindemittel und/oder ein Geliermittel als Betonzusatzmittel aufweist.

4. Spritzbetonauftragsvorrichtung (1) nach Anspruch 3,
**dadurch gekennzeichnet, dass**
es sich bei dem Erstarrungsbeschleuniger um Wasserglas oder Alkalilösungen handelt.

5. Spritzbetonauftragsvorrichtung (1) nach einem der vorhergehenden Ansprüche,
**dadurch gekennzeichnet, dass**
die Injektionsflüssigkeit eine Suspension und/oder Lösung und/oder Emulsion ist.

6. Spritzbetonauftragsvorrichtung (1) nach einem der Ansprüche 1 bis 4,
**dadurch gekennzeichnet, dass**
das Injektionsmaterial ein trockenes Gemisch ist, und eine Korngröße ≤ 0,5 mm, bevorzugt ≤ 0,1 mm gemäß DIN ISO 1927-3 (März 2013) aufweist.

7. Spritzbetonauftragsvorrichtung (1) nach einem der vorhergehenden Ansprüche,
**dadurch gekennzeichnet, dass**
das Trockengemisch ausschließlich aus mineralischem Material besteht.

8. Spritzbetonauftragsvorrichtung (1) nach einem der vorhergehenden Ansprüche,
**dadurch gekennzeichnet, dass**
das Trockengemisch sowohl Mittel- und Grobkornfraktionen mit > 0,063 mm gemäß DIN ISO 1927-3 (März 2013) als auch Mehlkornfraktionen mit ≤ 0,063 mm gemäß DIN ISO 1927-3 (März 2013) aufweist.

9. Spritzbetonauftragsvorrichtung (1) nach einem der vorhergehenden Ansprüche,
**dadurch gekennzeichnet, dass**
das Trockengemisch folgende Kornverteilung gemäß DIN ISO 1927-3 (März 2013) aufweist, wobei sich die Anteile auf die gesamte Trockenmasse beziehen und sich zu 100 Gew.% addieren:
| **Sieb** | **Min [Gew.%]** | **Max [Gew.%]** |
|---|---|---|
| > 6,3 mm | 0,0 | 10,0 |
| > 3,15 - 6,3 mm | 0,0 | 20,0 |
| > 1,00 - 3,15 mm | 15,0 | 40,0 |
| > 0,063 - 1,00 mm | 15 | 40,0 |
| ≤ 0,063 mm | 20 | 55,0 |

10. Spritzbetonauftragsvorrichtung (1) nach einem der vorhergehenden Ansprüche,
**dadurch gekennzeichnet, dass**
es sich bei dem hydraulischen Flüssigbinder um eine Lösung oder Suspension in Wasser oder einem anderen Lösungsmittel oder um flüssiges Polymer, vorzugsweise Kunstharz handelt, wobei der Flüssigbinder vorzugsweise zementfrei ist.

11. Spritzbetonauftragsvorrichtung (1) nach einem der vorhergehenden Ansprüche,
**dadurch gekennzeichnet, dass**
es sich bei dem Flüssigbinder um Wasserglas, bevorzugt Na- und/oder Ka- und/oder Li-Wasserglas, oder Phosphorsäure oder Monoaluminiumphosphat oder einen Polymerbinder, vorzugsweise Kunstharz, bevorzugt Phenolharz, insbesondere Novolak oder Mischungen daraus handelt.

12. Spritzbetonauftragsvorrichtung (1) nach einem der vorhergehenden Ansprüche,
**dadurch gekennzeichnet, dass**
der Flüssigbinder keine Betonzusatzmittel, insbesondere keinen Abbinderegulator, enthält.

13. Spritzbetonauftragsvorrichtung (1) nach einem der vorhergehenden Ansprüche,
**dadurch gekennzeichnet, dass**
die Mischdüse (8) aufweist
a) eine Aerosolerzeugungseinrichtung (55) zur Erzeugung eines Aerosols aus dem flüssigen oder trockenen, rieselfähigem Injektionsmaterial und der Förderluft,
b) eine Aerosolinjektionseinrichtung (56) zur Injektion des Aerosols, insbesondere mittig, in das Innere eines aus dem Trockengemisch bestehenden Trockenmaterialstroms.

14. Trockenspritzverfahren zum Aufspritzen einer Spritzmasse, insbesondere einer Feuerbetonspritzmasse, auf eine Oberfläche, vorzugsweise mit einer Spritzbetonauftragsvorrichtung (1) nach einem der vorhergehenden Ansprüche mit den folgenden Verfahrensschritten:
a) Vermischen eines wenigstens ein Betonzusatzmittel, bevorzugt einen Abbinderegulator, aufweisenden trockenen oder flüssigen Injektionsmaterials, insbesondere einer Injektionsflüssigkeit, mit Förderluft zu einem Aerosol,
b) Vermischen des Aerosols mit einem Trockengemisch aus bindemittel- und abbinderegulatorfreiem Material zu einem Materialgemisch,
c) Fördern des Materialgemisches mittels einer Schlauchleitung (9) zu einer Spritzdüse (10),
d) Mischen des Materialgemisches am spritzdüsenseitigen Ende der Schlauchleitung (9) in oder vor der Spritzdüse (10) mit einem Flüssigbinder zur Spritzmasse,
e) Auftragen der Spritzmasse auf die zu beschichtende Oberfläche mittels der Spritzdüse (10).

15. Trockenspritzverfahren nach Anspruch 14,
**dadurch gekennzeichnet, dass**
das Trockengemisch mit der Injektionsflüssigkeit in der Injektionskammer (30) vorbenetzt wird, so dass das vorbenetzte Materialgemisch eine Feuchte von 0,2 Gew.-% bis 7,0 Gew.-%, bevorzugt von 0,2 bis 5,0 Gew.-%, besonders bevorzugt von 0,2 bis 2,0 Gew.-% bezogen auf die Trockenmasse aufweist.

## Claims

1. A gunite application device (1) for gunning a gunning material, in particular a refractory concrete gunning material, onto a surface, having:
a) a compressed-air source (2) for providing conveying air;
b) an injection-material storage container (4) which is filled with a dry or liquid injection material, in particular an injection liquid, which contains at least one concrete additive, preferably a setting regulator;
c) a dry-mixture storage container (6) which is filled with a dry mixture from material free of binding agents and setting regulators;
d) a mixing nozzle (8) for mixing the injection material and the conveying air and the dry mixture so as to form an in particular pre-wetted material mixture;
e) a gunning nozzle (10) for gunning the gunning material onto the surface to be coated;
f) a hose line (9) connected to the mixing nozzle (8) for conveying the material mixture to the gunning nozzle (10);
g) a liquid storage container (11) which is filled with a liquid binding agent;
h) means for mixing the, in particular pre-wetted, material mixture and the liquid binding agent so as to form the gunning material at the gunning nozzle end of the hose line (9) ahead of or in the gunning nozzle (10).

2. The gunite application device (1) as claimed in claim 1,
**characterized in that**
the gunite application device (1) has an air-conveying line (3a) which is connected to the compressed-air source (2), as well as an injection-material conveying line (5) which is connected to the injection-material storage container (4), wherein the lines (3a, 5) are in each case connected to the mixing nozzle (8) and supply the respective material, or the conveying air, respectively, to the mixing nozzle (8).

3. The gunite application device (1) as claimed in claim 1,
**characterized in that**
the injection material comprises at least one solidifying accelerator and/or a curing accelerator and/or a decelerator and/or a plasticizer and/or a dust-binding agent and/or a gelling agent as a concrete additive.

4. The gunite application device (1) as claimed in claim 3,
**characterized in that**
the solidifying accelerator is soluble glass or alkaline solutions.

5. The gunite application device (1) as claimed in one of the preceding claims
**characterized in that**
the injection liquid is a suspension and/or a solution and/or an emulsion.

6. The gunite application device (1) as claimed in one of claims 1 to 4, **characterized in that**
the injection material is a dry mixture and has a grain size of ≤ 0,5 mm, preferably ≤ 0,1 mm, according to DIN ISO 1927-3 (March 2013).

7. The gunite application device (1) as claimed in one of the preceding claims,
**characterized in that**
the dry mixture is composed exclusively of mineral material.

8. The gunite application device (1) as claimed in one of the preceding claims,
**characterized in that**
the dry mixture comprises medium grain fractions as well as coarse grain fractions of > 0,063 mm according to DIN ISO 1927-3 (March 2013), as well as fine grain fractions of ≤ 0,063 mm according to DIN ISO 1927-3 (March 2013).

9. The gunite application device (1) as claimed in one of the preceding claims,
**characterized in that**
the dry mixture has the following grain distribution according to DIN ISO 1927-3 (March 2013), wherein the proportions refer to the entire dry mass and add up to 100% by weight:
| **Screen** | **Min [% by weight]** | **Max [% by weight]** |
|---|---|---|
| > 6,3 mm | 0,0 | 10,0 |
| > 3,15 - 6,3 mm | 0,0 | 20,0 |
| > 1,00 - 3,15 mm | 15,0 | 40,0 |
| > 0,063 - 1,00 mm | 15 | 40,0 |
| ≤ 0,063 mm | 20 | 55,0 |

10. The gunite application device (1) as claimed in one of the preceding claims,
**characterized in that**
the hydraulic liquid binding agent is a solution or a suspension in water, or in another solvent, or is a liquid polymer, preferably artificial resin, wherein the liquid binding agent is preferably free of cement.

11. The gunite application device (1) as claimed in one of the preceding claims,
**characterized in that**
the liquid binding agent is soluble glass, preferably Na-based and/or Ka-based and/or Li-based soluble glass, or phosphoric acid, or monoaluminum phosphate, or a polymer binding agent, preferably artificial resin, preferably phenolic resin, in particular novolak or mixtures thereof.

12. The gunite application device (1) as claimed in one of the preceding claims,
**characterized in that**
the liquid binding agent does not contain any concrete additives, in particular no setting regulator.

13. The gunite application device (1) as claimed in one of the preceding claims,
**characterized in that**
the mixing nozzle (8) comprises
a) an aerosol generation device (55) for generating an aerosol from a liquid or dry, free-flowing injection material and conveying air;
b) an aerosol injection device (56) for injecting the aerosol, in particular centrally, into the interior of a dry material stream consisting of a dry mixture.

14. A dry-gunning method for gunning a gunning material, in particular a refractory concrete gunning material, onto a surface, preferably using a gunite application device (1) as claimed in one of the preceding claims, said method comprising the following steps:
a) mixing at least one dry or liquid injection material, in particular an injection liquid, which contains at least one concrete additive, preferably a setting regulator, and conveying air so as to form an aerosol;
b) mixing the aerosol and a dry mixture from material which is free of binding agents and setting regulators so as to form a material mixture;
c) conveying the material mixture to a gunning nozzle (10) by means of a hose line (9);
d) mixing the material mixture and a liquid binding agent so as to form the gunning material at the gunning nozzle end of the hose line (9) in or ahead of the gunning nozzle (10);
e) applying the gunning material to the surface to be coated by means of the gunning nozzle (10).

15. The dry-gunning method as claimed in claim 14,
**characterized in that**
the dry mixture is pre-wetted with the injection liquid in the injection chamber (30) such that the pre-wetted material mixture has a moisture of 0,2% by weight to 7,0% by weight, preferably of 0,2 to 5,0% by weight, particularly preferably of 0,2 to 2,0% by weight, in terms of the dry mass.

## Revendications

1. Dispositif d'application de béton par projection (1) pour appliquer par projection une matière à projeter, en particulier une matière à projeter en béton réfractaire, sur une surface, présentant :
a) une source d'air comprimé (2) pour fournir de l'air de transport,
b) un réservoir de matériau d'injection (4) rempli d'un matériau d'injection sec ou liquide, en particulier d'un liquide d'injection, contenant au moins un adjuvant du béton, de manière préférée un régulateur de prise,
c) un réservoir de mélange sec (6) rempli d'un mélange sec composé d'un matériau sans liant et sans régulateur de prise,
d) une tuyère de mélange (8) pour mélanger le matériau d'injection à l'air de transport et au mélange sec pour obtenir un mélange de matériaux en particulier préalablement humidifié,
e) une tuyère de projection (10) pour appliquer par projection la matière à projeter sur la surface à revêtir,
f) un conduit tubulaire flexible (9) raccordé à la tuyère de mélange (8) pour transporter le mélange de matériaux vers la tuyère de projection (10),
g) un réservoir de liquide (11) rempli d'un liant liquide,
h) de moyens pour mélanger le mélange de matériaux, en particulier préalablement humidifié, au liant liquide pour obtenir la matière à projeter sur l'extrémité du côté de la tuyère de projection du conduit tubulaire flexible (9) en amont ou dans la tuyère de projection (10).

2. Dispositif d'application de béton par projection (1) selon la revendication 1,
**caractérisé en ce que**
le dispositif d'application de béton par projection (1) présente un conduit de transport d'air (3a) raccordé à la source d'air comprimé (2) ainsi qu'un conduit de transport de matériau d'injection (5) raccordé au réservoir de matériau d'injection (4), dans lequel les conduits (3a ; 5) sont raccordés respectivement à la tuyère de mélange (8) et amènent le matériau respectif ou l'air de transport à la tuyère de mélange (8).

3. Dispositif d'application de béton par projection (1) selon la revendication 1,
**caractérisé en ce que**
le matériau d'injection présente au moins un accélérateur de solidification et/ou un accélérateur de durcissement et/ou un retardateur et/ou un plastifiant et/ou un agent anti-poussières et/ou un agent gélifiant en tant qu'adjuvant du béton.

4. Dispositif d'application de béton par projection (1) selon la revendication 3,
**caractérisé en ce que**
l'accélérateur de solidification est du verre soluble ou des solutions alcalines.

5. Dispositif d'application de béton par projection (1) selon l'une quelconque des revendications précédentes,
**caractérisé en ce que**
le liquide d'injection est une suspension et/ou une solution et/ou une émulsion.

6. Dispositif d'application de béton par projection (1) selon l'une quelconque des revendications 1 à 4,
**caractérisé en ce que**
le matériau d'injection est un mélange sec et présente une granulométrie ≤ 0,5 mm, de manière préférée ≤ 0,1 mm selon la norme DIN ISO 1927-3 (mars 2013).

7. Dispositif d'application de béton par projection (1) selon l'une quelconque des revendications précédentes,
**caractérisé en ce que**
le mélange sec est constitué exclusivement de matériau minéral.

8. Dispositif d'application de béton par projection (1) selon l'une quelconque des revendications précédentes,
**caractérisé en ce que**
le mélange sec présente à la fois des fractions à grain moyen et à gros grain avec > 0,063 mm selon la norme DIN ISO 1927-3 (mars 2013) et des fractions de farine avec ≤ 0,063 mm selon la norme DIN ISO 1927-3 (mars 2013).

9. Dispositif d'application de béton par projection (1) selon l'une quelconque des revendications précédentes,
**caractérisé en ce que**
le mélange sec présente des répartitions de grains suivantes selon la norme DIN ISO 1927-3 (mars 2013), dans lequel les proportions se rapportent à la matière sèche totale et s'additionnent pour former 100 % du poids :
| Tamis | Min [% en poids] | Max [% en poids] |
|---|---|---|
| > 6,3 mm | 0,0 | 10,0 |
| > 3,15 - 6,3 mm | 0,0 | 20,0 |
| > 1,00 - 3,15 mm | 15,0 | 40,0 |
| > 0,063 - 1,00 mm | 15 | 40,0 |
| ≤ 0,063 mm | 20 | 55,0 |

10. Dispositif d'application de béton par projection (1) selon l'une quelconque des revendications précédentes,
**caractérisé en ce que**
le liant liquide hydraulique est une solution ou une suspension dans de l'eau ou un autre solvant ou un polymère liquide, de préférence est de la résine synthétique, dans lequel le liant liquide est de préférence sans ciment.

11. Dispositif d'application de béton par projection (1) selon l'une quelconque des revendications précédentes,
**caractérisé en ce que**
le liant liquide est du verre soluble, de manière préférée du verre soluble à base de Na et/ou de Ka et/ou de Li, ou de l'acide phosphorique ou du monophosphate d'aluminium ou un liant polymère, de préférence de la résine synthétique, de manière préférée de la résine phénolique, en particulier de la novolaque ou des mélanges de ceux-ci.

12. Dispositif d'application de béton par projection (1) selon l'une quelconque des revendications précédentes,
**caractérisé en ce que**
le liant liquide ne contient aucun adjuvant du béton, en particulier aucun régulateur de prise.

13. Dispositif d'application de béton par projection (1) selon l'une quelconque des revendications précédentes,
**caractérisé en ce que**
la tuyère de mélange (8) présente
a) un système de production d'aérosol (55) pour la production d'un aérosol à partir du matériau d'injection pouvant couler liquide ou sec et de l'air de transport,
b) un système d'injection d'aérosol (56) pour l'injection de l'aérosol, en particulier au centre, à l'intérieur d'un flux de matériau sec constitué du mélange sec.

14. Procédé de projection à sec pour appliquer par projection une matière à projeter, en particulier une matière à projeter en béton réfractaire, sur une surface, de préférence avec un dispositif d'application de béton par projection (1) selon l'une quelconque des revendications précédentes, avec les étapes de procédé suivantes :
a) le mélange d'un matériau d'injection sec ou liquide, en particulier d'un liquide d'injection, présentant au moins un adjuvant du béton, de manière préférée un régulateur de prise, à l'air de transport pour obtenir un aérosol,
b) le mélange de l'aérosol à un mélange sec composé d'un matériau sans liant et sans régulateur de prise pour obtenir un mélange de matériaux,
c) le transport du mélange de matériaux au moyen d'un conduit tubulaire flexible (9) vers une tuyère de projection (10),
d) le mélange du mélange de matériaux sur l'extrémité du côté de la tuyère de projection du conduit tubulaire flexible (9) dans ou en amont de la tuyère de projection (10) à un liant liquide pour obtenir la matière à projeter,
e) l'application de la matière à projeter sur la surface à revêtir au moyen de la tuyère de projection (10).

15. Procédé de projection à sec selon la revendication 14,
**caractérisé en ce que**
le mélange sec est préalablement humidifié avec le liquide d'injection dans la chambre d'injection (30) de telle sorte que le mélange de matériaux préalablement humidifié présente une humidité de 0,2 % en poids à 7,0 % en poids, de manière préférée de 0,2 à 5,0 % en poids, de manière particulièrement préférée de 0,2 à 2,0 % en poids, par rapport à la matière sèche.
